# EUROPEAN PATENT SPECIFICATION

(11) **EP 3 285 093 B1**
(45) Date of publication and mention of the grant of the patent: **19.05.2021**
(21) Application number: 15888750.5
(22) Date of filing: 24.07.2015
(51) Int. Cl.: G01V 5/00, B65G 35/00, B60D 1/14, B60S 13/00

(54) **FIXED VEHICLE SAFETY INSPECTION SYSTEM**
FIXIERTES FAHRZEUGSICHERHEITSPRÜFSYSTEM
SYSTÈME D'INSPECTION DE SÉCURITÉ FIXE DE VÉHICULE

(30) Priority: 15.04.2015 CN 201510176907
(43) Date of publication of application: 21.02.2018
(73) Proprietor: Nuctech Company Limited, TongFang Building, Shuangqinglu, Haidian District Beijing 100084 (CN)
(72) Inventor: FU, Bing, Beijing 100084 (CN); SUN, Shangmin, Beijing 100084 (CN); YU, Weifeng, Beijing 100084 (CN); TANG, Sheng, Beijing 100084 (CN); TAN, Haitian, Beijing 100084 (CN); LIANG, Jinning, Beijing 100084 (CN); LIANG, Zhizhong, Beijing 100084 (CN); HE, Yuan, Beijing 100084 (CN); WANG, Qiangqiang, Beijing 100084 (CN)
(74) Representative: Held, Stephan
(86) International application number: PCT/CN2015/000531
(87) International publication number: WO 2016/165045

(56) References cited:
- EP-A2- 2 829 443
- CN-A- 101 162 206
- CN-A- 102 530 791
- CN-A- 104 459 813
- CN-A- 104 730 591
- CN-A- 104 742 671
- CN-U- 204 801 439
- CN-U- 204 807 711
- JP-A- 2012 020 815
- JP-B2- 4 484 331
- US-A- 5 651 319
- US-A1- 2008 159 840
- US-A1- 2008 298 545
- US-B2- 7 954 839

## Description

### FIELD OF THE INVENTION

The present invention relates to a vehicle security check system, in particular to a fixed vehicle security check system.

### BACKGROUND OF THE INVENTION

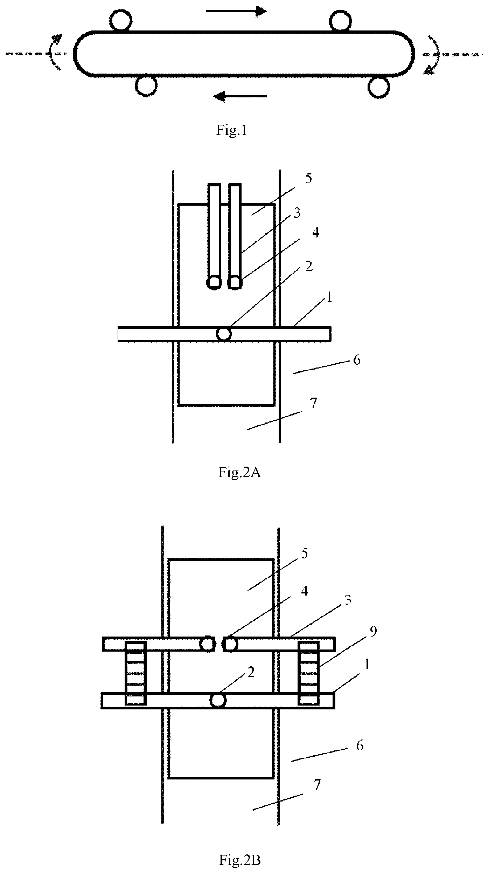

The vehicle towing device has many uses, for example, a towing device is needed in the fields of car washing, car repairing and security checking to fix the front wheels and/or rear wheels of the towed vehicle so as to drive the towed vehicle to move through a path. Usually the push member of a towing device may be in a form of a push roller, a chain, a plate link chain, etc. Such kind of towing device and push member need to rotate cyclically toward one direction so as to push the towed vehicle, for example the towing device using a push roller as the push member as shown in Fig. 1, so such kind of towing device is set to a one-way circulation mode that is similar to a closed-loop conveyor belt, so that the back stroke of the push member has to return to the start point of towing through an underground portion (the portion under the dashed lines in Fig. 1 represents the underground portion). In this case, a lot of constructions need to be made to form a large underground space, which results in a high cost for manufacturing and actual use, meanwhile, lacks flexibility and efficiency in disassembling and assembling of the towing device.

US 2008/159840 A1 discloses a self-driving trailer system comprising two trailers symmetrical in structure. Each of the trailers comprises a driving device, running wheels, a trailer body, a carrying device, a lift cylinder, a balance wheel, and two pairs of guide wheels. The driving device, the running wheels, and the balance wheel are coupled with the trailer body. The carrying device is coupled with the trailer body through the lift cylinder. A front carrying arm and a rear carrying arm can clamp front wheels of a vehicle under inspection, and move upwards and downwards by the lift cylinder.

### SUMMARY OF THE INVENTION

The present invention is proposed to solve the above-mentioned problem, and it aims at providing a fixed vehicle security check system, which can reduce the amount of construction work and increase the efficiency of vehicle towing, and enable more flexible installation and operation.

To achieve the above-mentioned objects, the present invention provides a fixed vehicle security check system, characterized in that it comprises:
a ray source for emitting X-rays;
at least two vehicle towing devices arranged in tandem for towing the checked vehicle through the area irradiated by the X-rays; and
a detector for receiving the X-rays emitted by the ray source and passing through the checked vehicle; each of the vehicle towing devices comprises a front yoke, a rear yoke, a front yoke shaft, a rear yoke shaft, a towing mechanism, a control unit, a drive unit and a towing path,
the front yoke and the rear yoke are respectively connected to the front yoke shaft and rear yoke shaft, and can rotate horizontally around the front yoke shaft and the rear yoke shaft under the control of the control unit, respectively,
the front yoke shaft and the rear yoke shaft are connected to the towing mechanism in tandem,
the drive unit drives the towing mechanism to run in the towing path, and the axial directions of both the front yoke shaft and the rear yoke shaft are perpendicular to the surface of the towing mechanism, the towing paths of the at least two vehicle towing devices have the same direction and are co-axial, the ray source and the detector are mounted on both sides of the towing path, and a direction of the X-rays emitted by the ray source is substantially perpendicular to the direction of the towing path;
and the fixed vehicle security check system further comprises a slide wire for supplying power in the towing path, the slide wire is arranged as a sectioned slide wire to power the vehicle towing device in a sectionalized manner, and the slide wire comprises a slide wire section 1, a slide wire section 2, a slide wire section 3, a slide wire section 4, and a slide wire section 5 which are arranged in tandem, wherein the slide wire section 2 and the slide wire section 4 are not powered simultaneously, and the slide wire section 1, the slide wire section 3 and the slide wire section 5 are powered all the time..

In addition, in the fixed vehicle security check system of the present invention, a repairing station for the vehicle towing devices is provided on a front and/or back extended path of the towing path.

In addition, in the fixed vehicle security check system of the present invention, the towing mechanism is a tractor,
the vehicle towing device comprises two said front yoke shafts which are distributed on the tractor in a bilaterally symmetrical manner,
the vehicle towing device comprises two said rear yoke shafts which are distributed on the tractor in a bilaterally symmetrical manner,
the front yokes are two bilaterally symmetrical yokes mounted on said two front yoke shafts, respectively,
the rear yokes are two bilaterally symmetrical yokes mounted on said two rear yoke shafts, respectively.

In addition, in the fixed vehicle security check system of the present invention,
a bottom of the towing path is lower than the ground nearby, and a lower surface of the front yoke and the rear yoke is slightly higher than the ground nearby,
a width of the towing path is smaller than a distance between the two front wheels of the towed vehicle.

In addition, in the fixed vehicle security check system of the present invention, the vehicle towing device further comprises a track arranged on both sides of the towing path, and the towing mechanism is disposed on two parallel rails of said track.

In addition, in the fixed vehicle security check system of the present invention, there are two towing mechanisms which are symmetrically disposed on the two parallel rails of the track,
each of said towing mechanisms is connected to one said front yoke shaft and one said rear yoke shaft, the two front yoke shafts are arranged symmetrically about a central axis of the towing path,
and the two rear yoke shafts are arranged symmetrically about a central axis of the towing path, each of said front yoke shafts is connected to one front yoke, and each of said rear yoke shafts is connected to one rear yoke, and the two front yokes are arranged symmetrically and the two rear yokes are arranged symmetrically.

In addition, in the fixed vehicle security check system of the present invention, the two rails of the track are arranged at the inner sides of both sides of the towing path, respectively.

In addition, in the fixed vehicle security check system of the present invention, the vehicle towing device further comprises a portal frame with the two ends thereof respectively connected to the two towing mechanisms on both sides of the towing path.

In addition, in the fixed vehicle security check system of the present invention, a slope is formed at a side of the front yoke and the rear yoke close to the front wheels of the vehicle, so that the front yoke and the rear yoke, when being held against the front wheels of the vehicle, have the maximum contact surface with the front wheels of the vehicle.

In addition, in the fixed vehicle security check system of the present invention, the vehicle towing device further comprises a front sensor and a rear sensor respectively disposed on the front yoke and the rear yoke, the front sensor and the rear sensor are respectively used for identifying contact of the front yoke and the rear yoke with the front wheels of the vehicle.

According to the invention of the present application, it is unnecessary to make a lot of constructions to form a large underground space, so there will not be high cost for manufacturing and actual use, moreover, flexible disassembling and assembling can be realized, so it is helpful for increasing the work efficiency.

### BRIEF DESCRIPTION OF THE ACCOMPANYING DRAWINGS

Fig. 1 is a schematic drawing of a towing device in the prior art, which uses a push roller as the push member.

Fig. 2A and Fig. 2B are schematic drawings of the vehicle towing device in embodiment 1. and Fig. 3C are schematic drawings of the vehicle towing device of a variation of embodiment 1.

Fig. 4A, Fig. 4B and Fig. 4C are front views corresponding to Fig. 3A, Fig. 3B and Fig. 3C.

Fig. 5A, Fig. 5B and Fig. 5C are schematic drawings of the vehicle towing device in embodiment 2.

Fig. 6A, Fig. 6B and Fig. 6C are schematic drawings of the vehicle towing device in embodiment 3.

Fig. 7 is a schematic drawing of a fixed security check system that uses the vehicle towing device of the present invention.

Fig. 8 is a schematic drawing of sectional power-off of the fixed security check system that uses the vehicle towing device of the present invention.

### DETAILED DESCRIPTION OF THE PREFERRED EMBODIMENTS

The present invention will be described in detail below with reference to the drawings.

### Embodiment 1

Fig. 2A and Fig. 2B are schematic drawings of the vehicle towing device in embodiment 1 of the present invention. Fig. 2A and Fig. 2B show a pit-type vehicle towing device. As shown in Fig. 2A and Fig. 2B, the vehicle towing device of embodiment 1 has a front yoke 1, a rear yoke 3, a front yoke shaft 2, a rear yoke shaft 4, a towing mechanism 5, a control unit, a drive unit and a towing path 7. Specifically, the front yoke 1 and the rear yoke 3 are respectively connected to the front yoke shaft 2 and the rear yoke shaft 4, and the front yoke 1 and the rear yoke 3 can rotate horizontally around the front yoke shaft 2 and the rear yoke shaft 4 under the control of the control unit (not shown in the figures), respectively. In addition, Fig. 2A shows a waiting state, in which the rear yoke 3 is substantially parallel to a sidewall of the towing path 7 (i.e. the rear yoke 3 is arranged in a vertical direction in Fig. 2A). Moreover, in Fig. 2A, the front yoke 1 is perpendicular to a sidewall of the towing path 7, but of course, the front yoke 1 may also be substantially parallel to the sidewall of the towing path 7 in the waiting state. That is to say, in the waiting state, the front yoke 1 and the rear yoke 3 may be either both parallel to the sidewall of the towing path 7, or both perpendicular to the sidewall of the towing path 7, or it is also all right if one of them is parallel to the sidewall of the towing path 7 and the other is perpendicular to the sidewall of the towing path 7. Furthermore, Fig. 2B shows a working state in which both the rear yoke 3 and the front yoke 1 are both perpendicular to the sidewall of the towing path 7, and front wheels 9 of the towed vehicle are placed between the front yoke 1 and the rear yoke 3. In addition, as shown in Figs. 2A and 2B, the front yoke shaft 2 and the rear yoke shaft 4 are respectively connected to the towing mechanism 5 in tandem. Moreover, as shown in the figures, the axial directions (directions perpendicular to the paper in the figures) of both the front yoke shaft 2 and the rear yoke shaft 4 are perpendicular to the surface of the towing mechanism 5, the drive unit drives the towing mechanism 5 so that the towing mechanism 5 runs in the towing path 7. In addition, the towing path 7 can be a pit lower than the ground 6 nearby (wherein the towing mechanism 5 is below the ground), or it may be parallel to the ground 6 nearby (wherein the towing mechanism 5 is above the ground).

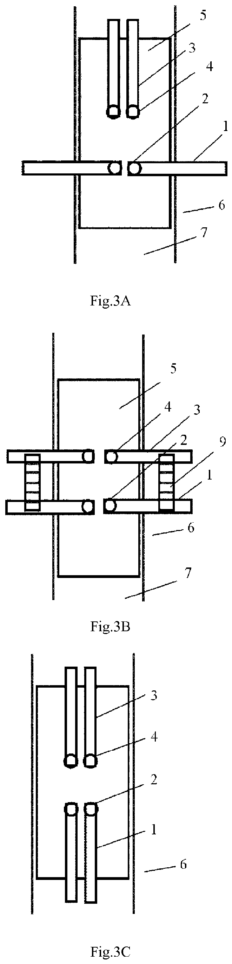

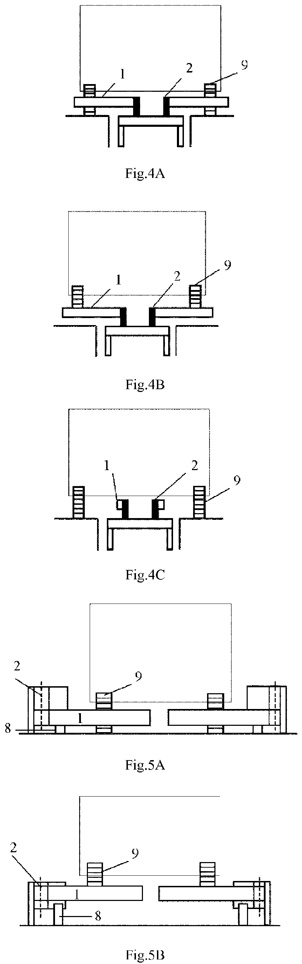

In addition, the towing mechanism 5 can be, but is not limited to, a tractor, in fact it can be any device that can realize the above-mentioned function. Moreover, Figs. 2A and 2B show a case where there are one front yoke shaft 2 and two rear yoke shafts 4, but it may also be a structure having one front yoke shaft and one rear yoke shaft, as long as the structure can realize rotation of the front yoke and the rear yoke. In addition, it may also be, but is not limited to, such a structure in which there are two front yoke shafts 2 which are distributed on the tractor 5 in a bilaterally symmetrical manner, and there are two rear yoke shafts 4 which are distributed on the tractor 5 in a bilaterally symmetrical manner, correspondingly, the front yokes 1 are two bilaterally symmetrical yokes mounted on said two front yoke shafts 2, respectively, the rear yokes 3 are two bilaterally symmetrical yokes mounted on said two rear yoke shafts 4, respectively, and twice of a length of the yoke is greater than a distance between two front wheels of the towed vehicle. The whole process of towing the vehicle is shown in Fig. 3A-3C and Figs. 4A-4C. A driver drives the vehicle to the position of the front yoke 1 as shown in Fig. 3A (in the case that the front yoke is perpendicular to the sidewall of the towing path 7, the vehicle arrives at a pre-identified position, e.g. a yellow line drawn in advance) and stops the vehicle when contacting the front yoke 1 (alternatively, other ways may be adopted, for example, providing a shallow V-pit or a mechanism that can move to form a V-pit at the location to stop the vehicle in the path, when the vehicle to be checked is driven into the V-pit, stopping of the vehicle in the designated point can be finished, or an area (which may be large) may be set, and the tractor moves towards the vehicle to be checked from a position far away from the vehicle to be checked and a sensor on the yoke is used to find the wheels), then the driver gets off the vehicle, and the rear yoke 3 is driven by the rear yoke shaft 4 to rotate to clamp the front wheels 9 of the vehicle, as shown in Fig. 3B; the front yoke 1 and the rear yoke 3 clasp and lift the front wheels 9 of the vehicle, and tow the vehicle to advance through the towing path 7, as shown in Fig. 4B; then the front yoke 1 and the rear yoke 3 lay down the front wheels 9 of the vehicle, and respectively rotate around the front yoke shaft 2 and the rear yoke shaft 4 until they are parallel to the sidewall of the towing path 7, as shown in Figs. 3C and 4C, and finally, they move backward to the start point of the towing path 7 to tow the newly entered vehicle, thereby finishing the whole process of towing vehicle. Furthermore, in this embodiment, the bottom of the towing path 7 is lower than the ground nearby, the width of the towing path 7 is smaller than the distance between the two front wheels of the towed vehicle, and the lower surfaces of the above-mentioned yokes are slightly higher than the ground nearby. However, it is not limited to this case, the bottom of the towing path 7 may be as high as the ground nearby, and the above-mentioned yokes may be slightly higher than the surface of the towing path 7.

### Embodiment 2

Embodiment 1 describes the case where there is one towing mechanism 1. In this embodiment, the case where there are two towing mechanisms will be described. In addition, this embodiment focuses on structures different from those in embodiment 1, while the same structures will not be repeatedly described herein.

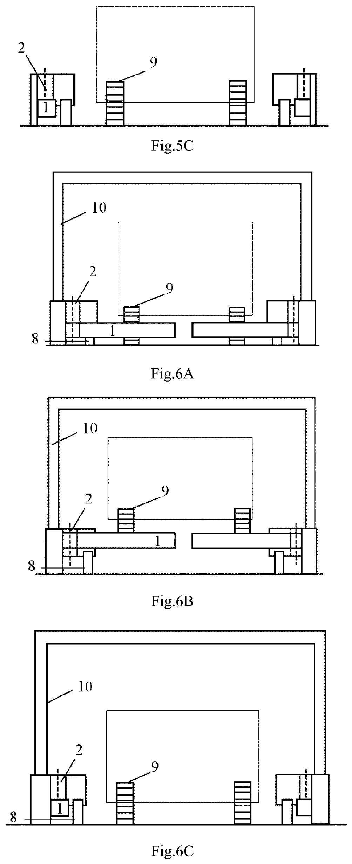

Figs. 5A, Fig. 5B and Fig. 5C are schematic drawings of the vehicle towing device in embodiment 2 of the present invention. That is, Figs. 5A, Fig. 5B and Fig. 5C show a track-type vehicle towing device. As shown in the figures, in this embodiment, the vehicle towing device further comprises a track arranged on both sides of the towing path, and there are two towing mechanisms, which are symmetrically arranged on said track, and each towing mechanism is connected to a front yoke shaft and a rear yoke shaft, and the two front yoke shafts are arranged symmetrically about a central axis of the towing path, likewise, the two rear yoke shafts are arranged symmetrically about a central axis of the towing path. In addition, like the structure shown in embodiment 1, each yoke shaft is connected to a yoke, and the left front yoke and the right front yoke are arranged symmetrically, the left rear yoke and the right rear yoke are arranged symmetrically. Except for the above-described structure, the rest structures are the same as the structures in embodiment 1.

Operation of the vehicle towing device in this embodiment will be described below. As shown in Figs. 5A, 5B and 5C, the towing mechanism is arranged in the towing path, wheels 8 of the towing mechanism are driven to move on the track (not shown in the figures) by a drive unit. The process of towing the vehicle in this embodiment is as follows: the driver drives the vehicle to a position near the front yoke 1 and stops the vehicle, and the driver gets off; the front yoke 1 contacts the front wheels 9 of the vehicle; the rear yoke (not shown) rotates about the rear yoke shaft until it is parallel to the front yoke 1, and it clamps the front wheels of the vehicle together with the front yoke 1, as shown in Fig. 5A; the front yoke and the rear yoke clasp and lift the front wheels of the vehicle, as shown in Fig. 5B, and tow the vehicle along the towing path through the preset area; then they lay down the front wheels of the vehicle; afterwards, the front yoke 1 and the rear yoke (which overlaps the front yoke 1 in Figs. 5A-5C) rotate around the front yoke shaft 2 and the rear yoke shaft (which overlaps the front yoke shaft in Figs. 5A-5C), respectively, until they are parallel to the towing path direction (i.e. parallel to the sidewall of the towing path), as shown in Fig. 5C; finally, the towing mechanism together with the front yoke 1, the front yoke shaft 2, the rear yoke and the rear yoke shaft move back to the start point of the towing path 7 to tow a newly entered vehicle, thereby finishing the whole process of towing vehicle. The track-type vehicle towing device in this embodiment has such an advantage as that it does not need any construction work at all, but only a track and a towing mechanism need to be mounted on the existing flat ground.

### Embodiment 3

A structure of another kind of vehicle towing device is provided in this embodiment. Figs. 6A, 6B and 6C are schematic drawings of the vehicle towing device in embodiment 3 of the present invention, namely, Figs. 6A, 6B and 6C show a portal-frame type vehicle towing device. In addition, this embodiment focuses on structures different from those in embodiments 1 and 2, while the same structures will not be repeatedly described herein.

As shown in Figs. 6A, 6B and 6C, the vehicle towing device in this embodiment further comprises a portal frame 10, whose two ends are connected to two towing mechanisms at both sides of the towing path, respectively. Specifically, in this embodiment, the portal-frame type vehicle towing device is formed by adding a portal frame on the basis of the track type towing device described in embodiment 2, as shown in Figs. 6A, 6B and 6C. The two ends of the portal frame 10 are mounted on two towing mechanisms at both sides of the towing path, respectively, and the towing processing thereof is similar to that of the track type device. In addition, since the portal frame is a rigid structure, the two towing mechanisms at both sides of the towing path can be driven synchronously by the portal frame, thereby avoiding displacement of the vehicle or jamming or sticking of the wheels of the towing mechanism caused by unsynchronous speeds of the towing mechanisms. Furthermore, in some cases, owing to the limitation of the height of the mounting site or the requirement of the client, the portal frame cannot be mounted, namely, only the above-described track-type towing mechanism can be mounted. In this case, a sensor can be used in combination with a PLC circuit to jointly control the two towing mechanisms so as to synchronize their speeds and positions in real time.

The vehicle towing device of the present invention is described by means of the above embodiments 1-3, but the present invention is not limited to cases defined in the above embodiments, various changes and combinations can be made. For example, with respect to the front yoke and rear yoke, a slope can be formed at a side of the front yoke and the rear yoke close to the front wheels of the vehicle, so that the front yoke and the rear yoke, when being held against the front wheels of the vehicle, have the maximum contact surface with the front wheels of the vehicle. In addition, for example, there may be a front sensor provided on the front yoke and a rear sensor provided on the rear yoke, the front sensor and rear sensor being used for identifying contact of the front yoke and the rear yoke with the front wheels of the vehicle, respectively. Specifically, when the front yoke and rear yoke clasp the front wheels of the vehicle, the rear sensor provided on the rear yoke senses whether the front wheels of the vehicle are within a space contacting the rear yoke through photoelectric or pressure sensing etc., for example, the transmission end of the photoelectric sensor can be arranged to be close to the rear yoke shaft, so that the emitted laser is parallel to the rear yoke, when the front wheels of the vehicle press on the rear yoke, the vehicle blocks the laser, so that the sensor senses the successful clasping of the wheels, otherwise, it is indicated that the wheels are missed. The photoelectric sensor may be of a receiving type (with a receiving end) or a scattering type (depending on diffusively scattering). The pressure sensor senses whether the wheels have been successfully clasped through the pressure put on the rear yoke by the front wheels of the vehicle. Although the above descriptions are about the rear yoke, they are also applicable to the front yoke. In the case where the rear sensor on the rear yoke senses a successful clasping of wheels while the front sensor senses an unsuccessful clasping of wheels, it means that the front wheels of the vehicle are lifted and departed from the front yoke, but are still in contact with the rear yoke temporarily. Either in this case or in the case of wheel missing, a control device is needed to instruct the vehicle towing device to stop the vehicle so as to prevent accidents. Moreover, the vehicle towing device of the present invention also has a characteristic of high towing power, and the maximum weight of the towed object can be 70 tons, which is impossible for a common towing device.

In addition, the vehicle towing device of the present invention can be applied to a fixed vehicle security check system. That is, the fixed vehicle security check system comprises: a ray source for emitting X-rays; a detector for receiving the X-rays emitted from the ray source and passing through the checked vehicle; and a vehicle towing device of the present invention. In such a fixed vehicle security check system, the ray source and the detector are mounted on both sides of the towing path of the vehicle towing device, and a direction of the X-rays emitted by the ray source is substantially perpendicular to the direction of the towing path of the vehicle towing device.

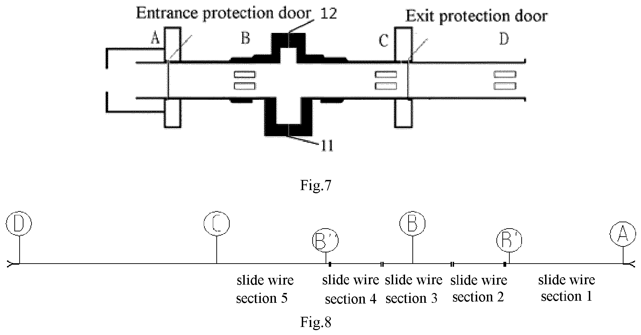

In addition, a fixed vehicle security check system having the following structure may be adopted, i.e. the fixed vehicle security check system comprises: a ray source for emitting X-rays; a detector for receiving the X-rays emitted from the ray source and passing through the checked vehicle; and vehicle towing devices of the present invention. However, there are at least two vehicle towing devices herein, which are arranged in tandem, and the towing paths thereof have the same direction and are co-axial, the ray source and the detector are mounted on both sides of the towing path, and a direction of the X-rays emitted by the ray source is substantially perpendicular to the direction of the towing path. To be specific, Fig. 7 shows a schematic drawing of such a fixed vehicle security check system. As shown in Fig. 7, there are four areas A, B, C and D, wherein the first vehicle towing device is provided in areas A and B, and the second vehicle towing device is provided in areas C and D. An entrance protection door is provided in areas A and B, and an exit protection door is provided in areas C and D. Wherein, the fixed vehicle security check system is between the entrance protection door and the exit protection door, a ray source 12 and a detector 11 of said fixed vehicle security check system are arranged on both sides of the towing path and enable the X-rays emitted from the ray source to be substantially perpendicular to the towing path as shown in Fig. 7, and in addition, preferably they are arranged on both sides of the towing path of the second vehicle towing device. The entrance protection door and the exit protection door are for shielding X-rays from entering into the external space. A checked vehicle is towed by the first vehicle towing device to enter the entrance protection door from area A, then the entrance protection door is closed, and the checked vehicle is towed by the first vehicle towing device to area B, then the first towing device finishes its task, so the front yoke 1 and rear yoke 3 thereof are adjusted to a state of being substantially parallel to the towing path and move to area A along the towing path (a state as shown in Figs. 3C, 4C, 5C and 6C), and at this time the second vehicle towing device moves to the vicinity of the front wheels of the vehicle in area B, and the front yoke and rear yoke of the second vehicle towing device rotate around their respective yoke shaft from a direction parallel to the towing path to become substantially perpendicular to the towing path, then they clasp and lift the front wheels of the vehicle to tow the front wheels of the vehicle to pass through area C. During this towing process, the ray source and the detector are turned on to scan the vehicle to finish the security check, then the ray source and the detector are turned off and the exit protection door is opened, the second vehicle towing device tows the vehicle to area D and then the exit protection door is closed, and the second vehicle towing device puts down the checked vehicle, rotates the front yoke and rear yoke to a state of being substantially parallel to the towing path, and moves to area C again to tow a new vehicle. In the process where the second vehicle towing device tows the preceding vehicle to pass through security check, the first vehicle towing device may tow the next vehicle into area A or area B so as to increase security check efficiency.

In addition, preferably a repairing station for the vehicle towing devices is provided on a front and/or back extended path of the towing path. If one vehicle towing device has a fault, it may be moved to the repairing station along the extended path of the towing path so as to be repaired in real time, while the other vehicle towing device continues to work, so operation of the vehicle security check system will not be influenced. In this way, the vehicle towing device does not have to be disassembled and moved away by a crane, so it is convenient and efficient and will not influence normal use of the vehicle security check system.

Furthermore, the vehicle security check system may have the following structure, i.e. the vehicle security check system comprises: a ray source for emitting X-rays; a detector for receiving the X-rays emitted from the ray source and passing through the checked vehicle; and vehicle towing devices of the present invention. However, there are at least two vehicle towing devices herein, which are arranged in tandem, and the towing paths thereof have the same direction and are co-axial, the ray source and the detector are mounted on both sides of the towing path, and a direction of the X-rays emitted by the ray source is substantially perpendicular to the direction of the towing path. In addition, the vehicle security check system further comprises a slide wire for supplying power in the towing path, said slide wire is arranged as a sectioned slide wire to power the vehicle towing device in a sectionalized manner.

In addition, preferably, the slide wire is arranged as at least four slide wire sections sequentially arranged in the towing path, and the vehicle security check system further comprises a first position sensor disposed between a first slide wire section and a second slide wire section as well as a second position sensor disposed between a third slide wire section and a fourth slide wire section.

In addition, preferably, said vehicle security check system further comprises a fifth slide wire section arranged between the second slide wire section and the third slide wire section. Specifically, in the case that there are two vehicle towing devices arranged in tandem, there will be a period of time in which the first vehicle towing device and the second vehicle towing device move towards each other, so the two towing devices may collide due to control or other reasons. In order to avoid such accident, the position sensor can be used to sense the vehicle towing device and to cut the power of a certain slide wire section in the towing path that can be powered off separately, thereby preventing accidents. As shown in Fig. 8, the double vertical lines indicate the section division, namely, the slide wire sections 1-5 in the figure are five slide wire sections, wherein slide wire section 2 (i.e. the second slide wire section) and slide wire section 4 (i.e. the third slide wire section) are not powered simultaneously, while slide wire sections 1, 3 and 5 are powered all the time. The letters in circles represent corresponding area points, the first vehicle towing device stops at point A to wait, the second vehicle towing device stops at point C to wait, and the scanning process is as follows: a first container truck (i.e. a checked vehicle) is driven to point A and is loaded onto the first vehicle towing device, then the first vehicle towing device delivers the first container truck to point B and put it down, then the first vehicle towing device returns to point A to wait, when the first vehicle towing device arrives at point A, the second vehicle towing device moves from point C to point B to get the truck, and after loading the first containing truck, it moves to point C, and during this movement, the ray source emits beams for scanning, when the scanning finishes, the second vehicle towing devices tows the first container truck to point C and then to point D to unload the first container truck. When the first vehicle towing device is delivering the second container truck from point A to point B, the second vehicle towing device is returning from point D to point C to wait, so the two devices moves towards each other at this time, and in order to prevent that the two vehicle towing devices do not stop at the positioning points for some reasons from happening, when the first vehicle towing device passes between points B and B', i.e. when the first sensor provided at point B' senses the first vehicle towing device, slide wire section 4 (the third slide wire section) is powered off; when the second vehicle towing device is between points B and B", i.e. when the second sensor provided at point B" senses the second vehicle towing device, slide wire section 2 (the second slide wire section) is powered off, thus even if both vehicle towing devices fail to stop between B' and B", the vehicle towing device that enters said area later will stop moving because of losing power, thereby ensuring safe operation of the system. Moreover, the fifth slide wire section may be powered all the time during the security check, preferably, it is continuously powered using the same power supply as the first slide wire section and the third slide wire section without being powered off, as shown by slide wire section 3 in Fig. 8.

## Claims

1. A fixed vehicle security check system, comprising:
a ray source (12) for emitting X-rays;
at least two vehicle towing devices arranged in tandem for towing a checked vehicle through the area irradiated by the X-rays; and
a detector (11) for receiving the X-rays emitted from the ray source (12) and passing through the checked vehicle, whereby
each of the vehicle towing devices comprises a front yoke (1), a rear yoke (2), a front yoke shaft (3), a rear yoke shaft (4), a towing mechanism (5), a control unit, a drive unit and a towing path (7),
the front yoke (1) and the rear yoke (2) are respectively connected to the front yoke shaft (3) and rear yoke shaft (4), and can rotate horizontally around the front yoke shaft (3) and the rear yoke shaft (4) under the control of the control unit, respectively,
the front yoke shaft (3) and the rear yoke shaft (4) are connected to the towing mechanism (5) in tandem,
the drive unit drives the towing mechanism (5) to run in the towing path (7), and the axial directions of both the front yoke shaft (3) and the rear yoke shaft (4) are perpendicular to the surface of the towing mechanism (5),
the towing paths (7) of the at least two vehicle towing devices have the same direction and are co-axial,
**characterized in that**
the ray source (12) and the detector (11) are mounted on both sides of the towing path (7), and a direction of the X-rays emitted by the ray source (12) is substantially perpendicular to the direction of the towing path (7);
and the fixed vehicle security check system further comprises a slide wire for supplying power in the towing path (7), the slide wire is arranged as a sectioned slide wire to power the vehicle towing device in a sectionalized manner, and the slide wire comprises a slide wire section 1, a slide wire section 2, a slide wire section 3, a slide wire section 4, and a slide wire section 5 which are arranged in tandem, wherein the slide wire section 2 and the slide wire section 4 are not powered simultaneously, and the slide wire section 1, the slide wire section 3 and the slide wire section 5 are powered all the time.

2. The fixed vehicle security check system according to claim 1, **characterized in that**
a repairing station for the vehicle towing devices is provided on a front and/or back extended path of the towing path (7).

3. The fixed vehicle security check system according to claim 1 or 2, **characterized in that** the towing mechanism (5) is a tractor,
the vehicle towing device comprises two said front yoke shafts (3) which are distributed on the tractor in a bilaterally symmetrical manner,
the vehicle towing device comprises two said rear yoke shafts (4) which are distributed on the tractor in a bilaterally symmetrical manner,
the front yokes (1) are two bilaterally symmetrical yokes mounted on said two front yoke shafts (3), respectively,
the rear yokes (2) are two bilaterally symmetrical yokes mounted on said two rear yoke shafts (4), respectively.

4. The fixed vehicle security check system according to claim 1 or 2, **characterized in that**
a bottom of the towing path (7) is lower than the ground (6) nearby, and a lower surface of the front yoke (1) and the rear yoke (2) is slightly higher than the ground (6) nearby,
a width of the towing path (7) is smaller than a distance between the two front wheels (9) of the towed vehicle.

5. The fixed vehicle security check system according to claim 1 or 2, **characterized in that**
the vehicle towing device further comprises a track arranged on both sides of the towing path (7), and the towing mechanism (5) is disposed on two parallel rails of said track.

6. The fixed vehicle security check system according to claim 4, **characterized in that**
the vehicle towing device further comprises a track arranged on both sides of the towing path (7), and the towing mechanism (5) is disposed on two parallel rails of said track.

7. The fixed vehicle security check system according to claim 5, **characterized in that**
there are two towing mechanisms (5) which are symmetrically disposed on the two parallel rails of the track,
each of said towing mechanisms (5) is connected to one said front yoke shaft (3) and one said rear yoke shaft (4), the two front yoke shafts (3) are arranged symmetrically about a central axis of the towing path (7), and the two rear yoke shafts (4) are arranged symmetrically about a central axis of the towing path (7),
each of said front yoke shafts (3) is connected to one front yoke (1), and each of said rear yoke shafts (4) is connected to one rear yoke (2), and the two front yokes (1) are arranged symmetrically and the two rear yokes (2) are arranged symmetrically.

8. The fixed vehicle security check system according to claim 5, **characterized in that** the two rails of the track are arranged at the inner sides of both sides of the towing path (7), respectively.

9. The fixed vehicle security check system according to claim 7, **characterized in that**
the vehicle towing device further comprises a portal frame (10) with the two ends thereof respectively connected to the two towing mechanisms (5) on both sides of the towing path (7).

10. The fixed vehicle security check system according to claim 1 or 2, **characterized in that**
a slope is formed at a side of the front yoke (1) and the rear yoke (2) close to the front wheels (9) of the vehicle, so that the front yoke (1) and the rear yoke (2), when being held against the front wheels (9) of the vehicle, have the maximum contact surface with the front wheels (9) of the vehicle.

11. The fixed vehicle security check system according to claim 1 or 2, **characterized in that**
the vehicle towing device further comprises a front sensor and a rear sensor respectively disposed on the front yoke (1) and the rear yoke (2), the front sensor and the rear sensor are respectively used for identifying contact of the front yoke (1) and the rear yoke(2) with the front wheels (9) of the vehicle.

## Patentansprüche

1. Feststehendes Fahrzeugsicherheits-Prüfsystem, das Folgendes umfasst:
eine Strahlenquelle (12) zum Emittieren von Röntgenstrahlen;
mindestens zwei Fahrzeugzugvorrichtungen, die zum Ziehen eines geprüften Fahrzeugs durch den Bereich, der von den Röntgenstrahlen bestrahlt wird, nacheinander angeordnet sind; und
einen Detektor (11) zum Empfangen der Röntgenstrahlen, die von der Strahlenquelle (12) emittiert werden und durch das geprüfte Fahrzeug verlaufen, wobei
jede der Fahrzeugzugvorrichtungen ein vorderes Joch (1), ein hinteres Joch (2), eine vordere Jochwelle (3), eine hintere Jochwelle (4), einen Zugmechanismus (5), eine Steuereinheit, eine Antriebseinheit und einen Zugweg (7) umfasst,
das vordere Joch (1) und das hintere Joch (2) mit der vorderen Jochwelle (3) bzw. der hinteren Jochwelle (4) verbunden sind und sich unter der Steuerung der Steuereinheit horizontal um die vordere Jochwelle (3) bzw. die hintere Jochwelle (4) drehen können,
die vordere Jochwelle (3) und die hintere Jochwelle (4) nacheinander mit dem Zugmechanismus (5) verbunden sind,
die Antriebseinheit den Zugmechanismus (5) derart antreibt, dass er sich im Zugweg (7) bewegt, und die axialen Richtungen sowohl der vorderen Jochwelle (3) als auch der hinteren Jochwelle (4) zur Oberfläche des Zugmechanismus (5) senkrecht sind,
die Zugwege (7) der mindestens zwei Fahrzeugzugvorrichtungen dieselbe Richtung aufweisen und koaxial sind,
**dadurch gekennzeichnet, dass**
die Strahlenquelle (12) und der Detektor (11) auf beiden Seiten des Zugwegs (7) angebracht sind und eine Richtung der Röntgenstrahlen, die durch die Strahlenquelle (12) emittiert werden, im Wesentlichen zur Richtung des Zugwegs (7) senkrecht ist;
und das feststehende Fahrzeugsicherheits-Prüfsystem ferner einen Schleifdraht zum Zuführen von Energie im Zugweg (7) umfasst, der Schleifdraht als ein geteilter Schleifdraht angeordnet ist, um die Fahrzeugzugvorrichtung auf geteilte Weise mit Energie zu versorgen, und der Schleifdraht einen Schleifdrahtabschnitt 1, einen Schleifdrahtabschnitt 2, einen Schleifdrahtabschnitt 3, einen Schleifdrahtabschnitt 4 und einen Schleifdrahtabschnitt 5 umfasst, die nacheinander angeordnet sind, wobei der Schleifdrahtabschnitt 2 und der Schleifdrahtabschnitt 4 nicht gleichzeitig mit Energie versorgt werden und der Schleifdrahtabschnitt 1, der Schleifdrahtabschnitt 3 und der Schleifdrahtabschnitt 5 fortwährend mit Energie versorgt werden.

2. Feststehendes Fahrzeugsicherheits-Prüfsystem nach Anspruch 1, **dadurch gekennzeichnet, dass**
eine Reparaturstation für die Fahrzeugzugvorrichtungen auf einem nach vorne und/oder nach hinten erweiterten Weg des Zugwegs (7) vorgesehen ist.

3. Feststehendes Fahrzeugsicherheits-Prüfsystem nach Anspruch 1 oder 2, **dadurch gekennzeichnet, dass**
der Zugmechanismus (5) eine Zugmaschine ist,
die Fahrzeugzugvorrichtung zwei der vorderen Jochwellen (3) umfasst, die auf eine bilateral symmetrische Weise auf der Zugmaschine verteilt sind,
die Fahrzeugzugvorrichtung zwei der hinteren Jochwellen (4) umfasst, die auf eine bilateral symmetrische Weise auf der Zugmaschine verteilt sind,
die vorderen Joche (1) zwei bilateral symmetrische Joche sind, die jeweils auf den zwei vorderen Jochwellen (3) angebracht sind,
die hinteren Joche (2) zwei bilateral symmetrische Joche sind, die jeweils auf den zwei hinteren Jochwellen (4) angebracht sind.

4. Feststehendes Fahrzeugsicherheits-Prüfsystem nach Anspruch 1 oder 2, **dadurch gekennzeichnet, dass**
ein Boden des Zugwegs (7) tiefer als der umgebende Grund (6) liegt und eine untere Fläche des vorderen Jochs (1) und des hinteren Jochs (2) geringfügig höher als der umgebende Grund (6) liegt,
eine Breite des Zugwegs (7) kleiner als ein Abstand zwischen den zwei Vorderrädern (9) des gezogenen Fahrzeugs ist.

5. Feststehendes Fahrzeugsicherheits-Prüfsystem nach Anspruch 1 oder 2, **dadurch gekennzeichnet, dass**
die Fahrzeugzugvorrichtung ferner eine Laufbahn umfasst, die auf beiden Seiten des Zugwegs (7) angeordnet ist, und der Zugmechanismus (5) auf zwei parallelen Schienen der Laufbahn angeordnet ist.

6. Feststehendes Fahrzeugsicherheits-Prüfsystem nach Anspruch 4, **dadurch gekennzeichnet, dass**
die Fahrzeugzugvorrichtung ferner eine Laufbahn umfasst, die auf beiden Seiten des Zugwegs (7) angeordnet ist, und der Zugmechanismus (5) auf zwei parallelen Schienen der Laufbahn angeordnet ist.

7. Feststehendes Fahrzeugsicherheits-Prüfsystem nach Anspruch 5, **dadurch gekennzeichnet, dass**
zwei Zugmechanismen (5) vorhanden sind, die auf den zwei parallelen Schienen der Laufbahn symmetrisch angeordnet sind,
jeder der Zugmechanismen (5) mit einer vorderen Jochwelle (3) und einer hinteren Jochwelle (4) verbunden ist, die zwei vorderen Jochwellen (3) um eine Mittenachse des Zugwegs (7) symmetrisch angeordnet sind und die zwei hinteren Jochwellen (4) um eine Mittenachse des Zugwegs (7) symmetrisch angeordnet sind,
jede der vorderen Jochwellen (3) mit einem vorderen Joch (1) verbunden ist und jede der hinteren Jochwellen (4) mit einem hinteren Joch (2) verbunden ist und die zwei vorderen Joche (1) symmetrisch angeordnet sind und die zwei hinteren Joche (2) symmetrisch angeordnet sind.

8. Feststehendes Fahrzeugsicherheits-Prüfsystem nach Anspruch 5, **dadurch gekennzeichnet, dass**
die zwei Schienen der Laufbahn jeweils an den Innenseiten beider Seiten des Zugwegs (7) angeordnet sind.

9. Feststehendes Fahrzeugsicherheits-Prüfsystem nach Anspruch 7, **dadurch gekennzeichnet, dass**
die Fahrzeugzugvorrichtung ferner einen Portalrahmen (10) umfasst, dessen zwei Enden jeweils mit den Zugmechanismen (5) auf beiden Seiten des Zugwegs (7) verbunden sind.

10. Feststehendes Fahrzeugsicherheits-Prüfsystem nach Anspruch 1 oder 2, **dadurch gekennzeichnet, dass**
eine Abschrägung an einer Seite des vorderen Jochs (1) und des hinteren Jochs (2) nahe bei den Vorderrädern (9) des Fahrzeugs gebildet ist, derart, dass das vordere Joch (1) und das hintere Joch (2) dann, wenn sie gegen die Vorderräder (9) den Fahrzeugs gehalten werden, die maximale Kontaktfläche mit den Vorderrädern (9) des Fahrzeugs aufweisen.

11. Feststehendes Fahrzeugsicherheits-Prüfsystem nach Anspruch 1 oder 2, **dadurch gekennzeichnet, dass**
die Fahrzeugzugvorrichtung ferner einen vorderen Sensor und einen hinteren Sensor umfasst, die auf dem vorderen Joch (1) bzw. dem hinteren Joch (2) angeordnet sind und der vordere Sensor und der hintere Sensor zum Identifizieren des Kontakts des vorderen Jochs (1) bzw. des hinteren Jochs (2) mit den Vorderrädern (9) des Fahrzeugs verwendet werden.

## Revendications

1. Système de contrôle de sécurité fixe pour véhicule comprenant :
une source de rayons (12) destinée à émettre des rayons X ;
au moins deux dispositifs de remorquage de véhicule agencés en tandem pour remorquer un véhicule contrôlé à travers la zone irradiée par les rayons X ; et
un détecteur (11) destiné à recevoir les rayons X émis depuis la source de rayons (12) et passant à travers le véhicule contrôlé, grâce à quoi chacun des dispositifs de remorquage de véhicule comprend une armature avant (1),
une armature arrière (2), un arbre d'armature avant (3), un arbre d'armature arrière (4), un mécanisme de remorquage (5), une unité de commande, une unité d'entraînement et un trajet de remorquage (7),
l'armature avant (1) et l'armature arrière (2) sont respectivement connectées à l'arbre d'armature avant (3) et à l'arbre d'armature arrière (4),
et peuvent être mises en rotation horizontalement autour de l'arbre d'armature avant (3) et de l'arbre d'armature arrière (4) sous la commande de l'unité de commande, respectivement,
l'arbre d'armature avant (3) et l'arbre d'armature arrière (4) sont connectés au mécanisme de remorquage (5) en tandem,
l'unité d'entraînement entraîne le mécanisme de remorquage (5) pour se déplacer dans le trajet de remorquage (7), et les directions axiales à la fois de l'arbre d'armature avant (3) et de l'arbre d'armature arrière (4) sont perpendiculaires à la surface du mécanisme de remorquage (5),
les trajets de remorquage (7) desdits au moins deux dispositifs de remorquage de véhicule ont la même direction et sont coaxiaux,
**caractérisé en ce que**
la source de rayons (12) et le détecteur (11) sont montés sur les deux côtés du trajet de remorquage (7), et une direction des rayons X émis par la source de rayons (12) est sensiblement perpendiculaire à la direction du trajet de remorquage (7) ; et
le système de contrôle de sécurité fixe pour véhicule comprend en outre un fil glissant destiné à alimenter une puissance dans le trajet de remorquage (7), le fil glissant est agencé comme un fil glissant à sections pour alimenter le dispositif de remorquage de véhicule d'une manière par sections, et le fil glissant comprend une section 1 de fil glissant, une section 2 de fil glissant, une section 3 de fil glissant, une section 4 de fil glissant et une section 5 de fil glissant qui sont agencées en tandem, dans lequel la section 2 de fil glissant et la section 4 de fil glissant ne sont pas alimentées simultanément, et la section 1 de fil glissant, la section 3 de fil glissant et la section 5 de fil glissant sont alimentées tout le temps.

2. Système de contrôle de sécurité fixe pour véhicule selon la revendication 1, **caractérisé en ce que**
une station de réparation pour les dispositifs de remorquage de véhicule est prévue sur un trajet s'étendant vers l'avant et/ou l'arrière du trajet de remorquage (7).

3. Système de contrôle de sécurité fixe pour véhicule selon la revendication 1 ou 2, **caractérisé en ce que**
le mécanisme de remorquage (5) est un tracteur,
le dispositif de remorquage de véhicule comprend deux desdits arbres d'armature avant (3) qui sont distribués sur le tracteur d'une manière bilatéralement symétrique,
le dispositif de remorquage de véhicule comprend deux desdits arbres d'armature arrière (4) qui sont distribués sur le tracteur d'une manière bilatéralement symétrique,
les armatures avant (1) sont deux armatures bilatéralement symétriques montées sur lesdits deux arbres d'armature avant (3), respectivement,
les armatures arrière (2) sont deux armatures bilatéralement symétriques montées sur lesdits deux arbres d'armature arrière (4), respectivement.

4. Système de contrôle de sécurité fixe pour véhicule selon la revendication 1 ou 2, **caractérisé en ce que**
un fond du trajet de remorquage (7) est plus bas que le sol (6) à proximité, et une surface inférieure de l'armature avant (1) et de l'armature arrière (2) est légèrement plus élevée que le sol (6) à proximité,
une largeur du trajet de remorquage (7) est plus petite qu'une distance entre les deux roues avant (9) du véhicule remorqué.

5. Système de contrôle de sécurité fixe pour véhicule selon la revendication 1 ou 2, **caractérisé en ce que**
le dispositif de remorquage de véhicule comprend en outre une voie agencée sur les deux côtés du trajet de remorquage (7), et le mécanisme de remorquage (5) est disposé sur deux rails parallèles de ladite voie.

6. Système de contrôle de sécurité fixe pour véhicule selon la revendication 4, **caractérisé en ce que**
le dispositif de remorquage de véhicule comprend en outre une voie agencée sur les deux côtés du trajet de remorquage (7) et le mécanisme de remorquage (5) est disposé sur deux rails parallèles de ladite voie.

7. Système de contrôle de sécurité fixe pour véhicule selon la revendication 5, **caractérisé en ce que**
il y a deux mécanismes de remorquage (5) qui sont symétriquement disposés sur les deux rails parallèles de la voie, chacun desdits mécanismes de remorquage (5) est connecté à un desdits arbres d'armature avant (3) et à un desdits arbres d'armature arrière (4), les deux arbres d'armature avant (3) sont agencés symétriquement autour d'un axe central du trajet de remorquage (7), et les deux arbres d'armature arrière (4) sont agencés symétriquement autour d'un axe central du trajet de remorquage (7), chacun desdits arbres d'armature avant (3) est connecté à une armature avant (1), et chacun desdits arbres d'armature arrière (4) est connecté à une armature arrière (2), et les deux armatures avant (1) sont agencées symétriquement et les deux armatures arrière (2) sont agencées symétriquement.

8. Système de contrôle de sécurité fixe pour véhicule selon la revendication 5, **caractérisé en ce que**
les deux rails de la voie sont agencés au niveau des côtés intérieurs des deux côtés du trajet de remorquage (7), respectivement.

9. Système de contrôle de sécurité fixe pour véhicule selon la revendication 7, **caractérisé en ce que**
le dispositif de remorquage de véhicule comprend en outre un châssis formant portique (10) avec les deux extrémités de celui-ci respectivement connectées aux deux mécanismes de remorquage (5) sur les deux côtés du trajet de remorquage (7).

10. Système de contrôle de sécurité fixe pour véhicule selon la revendication 1 ou 2, **caractérisé en ce que**
une pente est formée au niveau d'un côté de l'armature avant (1) et de l'armature arrière (2) près des roues avant (9) du véhicule, de sorte que l'armature avant (1) et l'armature arrière (2), quand elles sont maintenues contre les roues avant (9) du véhicule, ont la surface de contact maximum avec les roues avant (9) du véhicule.

11. Système de contrôle de sécurité fixe pour véhicule selon la revendication 1 ou 2, **caractérisé en ce que**
le dispositif de remorquage de véhicule comprend en outre un capteur avant et un capteur arrière respectivement disposés sur l'armature avant (1) et l'armature arrière (2), le capteur avant et le capteur arrière sont respectivement utilisés pour identifier un contact de l'armature avant (1) et de l'armature arrière (2) avec les roues avant (9) du véhicule.
